(19) Europäisches Patentamt

European Patent Office

Office européen des brevets

(11) **EP 4 417 339 A1**

(12) **EUROPEAN PATENT APPLICATION**

(43) Date of publication:
**21.08.2024  Bulletin 2024/34**

(21) Application number: **24157408.6**

(22) Date of filing: **13.02.2024**

(51) International Patent Classification (IPC):
**B21J 15/02** $^{(2006.01)}$     **B21J 15/36** $^{(2006.01)}$
**F16B 5/04** $^{(2006.01)}$     **F16B 19/08** $^{(2006.01)}$

(52) Cooperative Patent Classification (CPC):
**B21J 15/025; B21J 15/36; F16B 5/04; F16B 19/086**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.02.2023  US 202363484779 P**

(71) Applicant: **Meridian Lightweight Technologies, Inc.**
**Strathroy, ON N7G 4H6 (CA)**

(72) Inventors:
• **Tabatabaei, Yousef**
  **London, N6J 4W1 (CA)**
• **Weiler, Jonathan**
  **London, N5X 0K5 (CA)**
• **Wang, Gerry**
  **London, N5X 4H4 (CA)**

(74) Representative: **Barker Brettell LLP**
**100 Hagley Road**
**Edgbaston**
**Birmingham B16 8QQ (GB)**

(54) **SELF-PIERCING RIVETING DIE AND METHOD OF JOINING MAGNESIUM ALLOY COMPONENTS**

(57)     A self-piercing riveting (SPR) die includes a die body including an outer surface, a lower surface that is parallel to and offset from the outer surface, and a side surface that circumscribes the lower surface. A distance between the lower surface and the outer surface is within a range between approximately 0.4 mm to 1.2 mm. An angle between the side surface and the lower surface is within a range between approximately 55 to 80 degrees. An inner diameter of the outer surface is within a range between approximately 13 to 18 mm.

**FIG. 4**

EP 4 417 339 A1

**Description**

CROSS-REFERENCE TO RELATED APPLICATIONS

This application claims the benefit of and priority to U.S. Provisional Patent Application No. 63/484,779, filed February 14, 2023, the entire disclosure of which is hereby incorporated by reference herein.

BACKGROUND

The present application relates to self-piercing riveting (SPR) technologies. More specifically, the present application relates to dies used in the installation of self-piercing rivets.

Self-piercing riveting (SPR) is a high-speed mechanical fastening process for joining two or more sheets of material without a predrilled or punched hole. Typically, SPR processes are conducted by driving a semi-tubular rivet through top layers of material and upsetting the rivet in a lower layer (without completely piercing the lower layer) to form a durable mechanical joint. Attempts have been made to use existing SPR technologies to join materials with reduced ductility and formability, such as magnesium alloys, which offer the potential for weight reduction over steel and aluminum alloys. However, the mechanical properties of magnesium alloys limit their use in SPR processes. For example, as a result of their reduced formability, magnesium alloys may become easily damaged during installation of the rivet into the material, and the structural integrity of the resulting magnesium alloy casting is reduced.

It would be advantageous to provide an improved method and/or system to facilitate the fastening of magnesium alloys during SPR operations that overcomes the foregoing challenges.

SUMMARY

At least one embodiment of the present disclosure relates to a self-piercing riveting (SPR) die. The SPR die includes a die body including an outer surface, a lower surface that is parallel to and offset from the outer surface, and a side surface that circumscribes the lower surface and extends between the lower surface and the outer surface. A distance between the lower surface and the outer surface is within a range between approximately 0.4 mm to 1.2 mm. An angle between the side surface and the lower surface is within a range between approximately 55 to 80 degrees. An inner diameter of the outer surface is within a range between approximately 13 to 18 mm.

In some embodiments, the inner diameter is within a range between 14 mm to 18 mm.

In some embodiments, the outer surface, the lower surface, and the side surface are disposed at a first end of the die body. In some embodiments, the outer surface is concentric with the lower surface.

In some embodiments, the side surface is a tapered surface having a greater diameter proximate to the outer surface than the lower surface. For example, the side surface may be a frustoconical shaped surface.

In some embodiments, the angle between the side surface and the lower surface is within a range between approximately 59 degrees and 69.4 degrees relative to the lower surface.

In some embodiments, a radius at a transition between the side surface and the outer surface is approximately the same as a radius at a transition between the lower surface and the side surface.

In some embodiments, the side surface and the lower surface together define a recessed area having a die volume within a range between 80 mm$^3$ to 150 mm$^3$.

Another embodiment of the present disclosure relates to an SPR joint. The SPR joint includes an upper layer, a lower layer including a magnesium material, and a rivet extending through the upper layer and into the lower layer. The rivet includes a head, a cylindrical extension extending away from the head, and a web extending radially inwardly of the cylindrical extension. A thickness of the web is less than or approximately equal to a thickness of the head.

In some embodiments, the thickness of the web is less than or equal to approximately 1.5 mm.

In some embodiments, the head and the cylindrical extension together defining an interior cavity. In such embodiments, the upper layer may extend axially into the interior cavity to a region that is approximately axially aligned with the head.

In some embodiments, the rivet forms a protrusion in the lower layer, a volume of the protrusion being within a range between (i) $cV_p$, and (ii) $cV_p + 138$, where $V_p$ represents a pierced volume of the upper layer that is occupied by the rivet, and c is a constant that varies within a range between approximately 12.5 to 13.

In some embodiments, the upper layer includes one of a steel material, an aluminum material, or the magnesium material.

In some embodiments, a thickness of the upper layer is less than or equal to approximately 2.5 mm, and a thickness of the lower layer is within a range between approximately 3 to 3.6 mm.

In some embodiments, the thickness of the web is less than or equal to approximately 1.5 mm when an upper layer material of the upper layer has an ultimate tensile strength (UTS) of greater than or equal to approximately 700 MPa, less than or equal to approximately 0.5 mm when the UTS of the upper layer material is within a range between approximately 400 to 700 MPa, and less than or equal to approximately 0.2 mm when the UTS of the upper layer material is within a range between approximately 250 to 400 MPa.

Another embodiment relates to a method of forming an SPR joint. The method includes providing a stack including an upper layer and a lower layer, where the upper layer and/or lower layer includes a magnesium layer. The method also includes engaging an outer surface of the SPR die with a surface of the stack. The SPR die includes a lower surface and a side surface circumscribing the lower surface and extending between the lower surface and the outer surface. The lower surface is spaced apart from the outer surface by a distance that is within a range between approximately 0.4 mm to 1.2 mm. An angle between the side surface and the lower surface is within a range between approximately 55 degrees to 80 degrees. An inner diameter of the outer surface is within a range between approximately 13 mm to 18 mm. The method further includes pressing an SPR rivet through the stack toward the SPR die.

In some embodiments, the method further includes determining a web thickness of the rivet based on a material property of the upper layer, and selecting the rivet based on the web thickness. The material property may be an ultimate tensile strength of the upper layer.

In some embodiments, the method further includes determining a die volume of the SPR die based on a pierced volume of the upper layer.

In some embodiments, pressing the rivet through the stack includes pressing a head of the rivet toward the stack to deform the upper layer into an interior cavity defined by the rivet so that the upper layer extends axially into the interior cavity to a region that is approximately axially aligned with the head.

In various aspects, the present technology may include, but is not limited to, the features and combinations of features recited in the following paragraphs, it being understood that the following paragraphs should not be interpreted as limiting the scope of the claims as appended hereto or mandating that all such features must necessarily be included in such claims:

A self-piercing riveting (SPR) die, comprising:

a die body, comprising:

an outer surface;
a lower surface that is parallel to and offset from the outer surface, a distance between the lower surface and the outer surface being within a range between approximately 0.4 mm to 1.2 mm; and

a side surface circumscribing the lower surface and extending between the lower surface and the outer surface, an angle between the side surface and a reference line passing through the lower surface being within a range between approximately 55 degrees to 80 degrees, an inner diameter of the outer surface being within a range between approximately 13 mm to 18 mm.

The SPR die as described in the paragraph above, wherein the inner diameter is within a range between 14 mm to 18 mm.

The SPR die as described in any one of the paragraphs above, wherein the outer surface, the lower surface, and the side surface are disposed at a first end of the die body, the outer surface being concentric with the lower surface.

The SPR die as described in any one of the paragraphs above, wherein the side surface is a tapered surface having a greater diameter proximate to the outer surface than the lower surface.

The SPR die as described in any one of the paragraphs above, wherein the side surface is a frustoconical shaped surface.

The SPR die as described in any one of the paragraphs above, wherein the angle between the side surface and the lower surface is within a range between approximately 59 degrees and 69.4 degrees relative to the lower surface.

The SPR die as described in any one of the paragraphs above, wherein a radius at a transition between the side surface and the outer surface is approximately the same as a radius at a transition between the lower surface and the side surface.

The SPR die as described in any one of the paragraphs above, wherein the side surface and the lower surface together define a recessed area having a die volume within a range between 80 $mm^3$ to 150 $mm^3$.

An SPR joint, comprising:

an upper layer;
a lower layer comprising a magnesium material; and
a rivet extending through the upper layer and into the lower layer, the rivet including:

a head;

a cylindrical extension extending away from the head; and
a web extending radially inwardly of the cylindrical extension, a thickness of the web being less than or approximately equal to a thickness of the head.

The SPR joint as described in the paragraph above, wherein the thickness of the web is less than or equal to approximately 1.5 mm.

The SPR joint as described in either of the two paragraphs above, wherein the head and the cylindrical extension together defining an interior cavity, the upper layer extending axially into the interior cavity to a region that is approximately axially aligned with the head.

The SPR joint as described in any of the three paragraphs above, wherein the rivet forms a protrusion in the lower layer, a volume of the protrusion being within a range between (i) $cV_p$, and (ii) $cV_p$ + 138, where $V_p$ represents a pierced volume of the upper layer that is occupied by the rivet, and c is a constant that varies within a range between approximately 12.5 to 13.

The SPR joint as described in any of the four paragraphs above, wherein the upper layer comprises one of a steel material, an aluminum material, or the magnesium material.

The SPR joint as described in any of the five paragraphs above, wherein a thickness of the upper layer is less than or equal to approximately 2.5 mm, and a thickness of the lower layer is within a range between approximately 3 to 3.6 mm.

The SPR joint as described in any of the six paragraphs above, wherein the thickness of the web is less than or equal to approximately 1.5 mm when an upper layer material of the upper layer has an ultimate tensile strength (UTS) of greater than or equal to approximately 700 MPa, less than or equal to approximately 0.5 mm when the UTS of the upper layer material is within a range between approximately 400 to 700 MPa, and less than or equal to approximately 0.2 mm when the UTS of the upper layer material is within a range between approximately 250 to 400 MPa.

A method of forming an SPRjoint, comprising:

providing a stack including an upper layer and a lower layer, at least one of the upper layer or the lower layer including a magnesium layer;
engaging an outer surface of an SPR die with a surface of the stack, the SPR die comprising:

a lower surface that is spaced apart from the outer surface by a distance that is within a range between approximately 0.4 mm to 1.2 mm; and
a side surface circumscribing the lower surface and extending between the lower surface and the outer surface, wherein an angle between the side surface and the lower surface is within a range between approximately 55 degrees and 80 degrees, and wherein an inner diameter of the outer surface is within a range between approximately 13 mm and 18 mm; and

pressing a rivet through the stack toward the SPR die.

The method as in the paragraph above, further comprising determining a web thickness of the rivet based on a material property of the upper layer, and selecting the rivet based on the web thickness.

The method as described in either of the two paragraphs above, wherein the material property is an ultimate tensile strength of the upper layer.

The method as described in any of the three paragraphs above, further comprising determining a die volume of the SPR die based on a pierced volume of the upper layer.

The method as described in any of the four paragraphs above, wherein pressing the rivet through the stack comprises pressing a head of the rivet toward the stack to deform the upper layer into an interior cavity defined by the rivet so that the upper layer extends axially into the interior cavity to a region that is approximately axially aligned with the head.

This summary is illustrative only and should not be regarded as limiting.

BRIEF DESCRIPTION OF THE FIGURES

The disclosure will become more fully understood from the following detailed description, taken in conjunction with the accompanying figures, wherein like reference numerals refer to like elements, in which:

FIG. 1 is a side cross-sectional view of a conventional self-piercing riveting (SPR) joint for a magnesium alloy die casting.

FIG. 2 is bottom view of the die casting of FIG. 1.

FIGS. 3A-3D illustrate a schematic representation of various failure modes for a magnesium alloy die casting using a conventional SPR joint such as that illustrated in FIG. 1.

FIG. 4 is a perspective view of an SPR die, according to an embodiment of the present application.

FIG. 5 is a top view of the SPR die of FIG. 4.

FIG. 6 is a side cross-sectional view of the SPR die of FIG. 4.

FIG. 7 is a side cross-sectional view of a cavity portion of the SPR die of FIG. 4.

FIG. 8 is a side cross-sectional view of an SPR rivet, according to an embodiment.

FIG. 9 is a table of rivet web thickness as a function of material strength of a joining material, according to an embodiment.

FIG. 10 is a flow diagram of a method of selecting a die for use in forming an SPR joint, according to an embodiment.

FIG. 11 is a flow diagram of a method of forming an SPR j oint, according to an embodiment.

FIGS. 12A-12C are side cross-sectional views of SPR joints formed using the SPR die, rivet, and selection processes of FIGS. 4-8, according to an embodiment.

DETAILED DESCRIPTION

Before turning to the figures, which illustrate certain exemplary embodiments in detail, it should be understood that the present disclosure is not limited to the details or methodology set forth in the description or illustrated in the figures. It should also be understood that the terminology used herein is for the purpose of description only and should not be regarded as limiting.

The present disclosure relates to self-piercing riveting (SPR) technologies and forming tools for SPR processes. SPR is a technique used to join sheets of materials (either the same material or dissimilar materials) together. These SPR technologies are particularly useful in automotive applications, such as in joining materials at the location of shock towers for vehicle suspension systems and installation of vehicle body panels. Unlike conventional riveting operations, which require hole and/or openings to guide the rivets through the sheets before fastening the materials together, the rivets used in SPR joints require no predrilling or machining of the receiving materials. Rather, the rivets are pressed through unformed sheets and deform and/or pierce the sheets to create a robust mechanical interlock. Although the SPR processes are described herein as being applied to or forming part of a vehicle body or structural layer, it should be understood that the same SPR design and process may be implemented in other non-vehicle applications where lightweight castings may be used.

To install the SPR rivet, the sheets of material are layered on top of one another in a desired orientation. The stack of materials is then clamped between a die and a blank holder (e.g., fixture, etc.) that holds the stack against the die. Next, a press drives the rivet, from an upper side of the stack, into the stack and toward the die, piercing the upper sheet(s) and causing the lower sheet to deform into the die. The shape of the die causes the rivet and the lower sheet to flair outwards, forming a button-shaped protrusion in the lower sheet and a robust mechanical connection to hold the sheets together. SPR joining techniques work particularly well for connecting sheets made from steel and aluminum alloys (e.g., metals having a face-centered cubic metal crystalline structure (FCC) or face-centered cubic crystalline structure (BCC) which provide enough slip planed during deformation), which have high ductility and formability to reduce the likelihood of cracking during rivet installation.

Magnesium alloys provide a strong and lightweight alternative to aluminum and other metals used in vehicle applications, and can increase the overall performance of the vehicle by reducing vehicle weight. However, compared to their aluminum and steel counterparts, the hexagonal closed pack crystalline structure of magnesium alloys reduces the maximum allowable deformation of the material before cracking occurs. Such cracking at the SPR joint can reduce the structural integrity of castings.

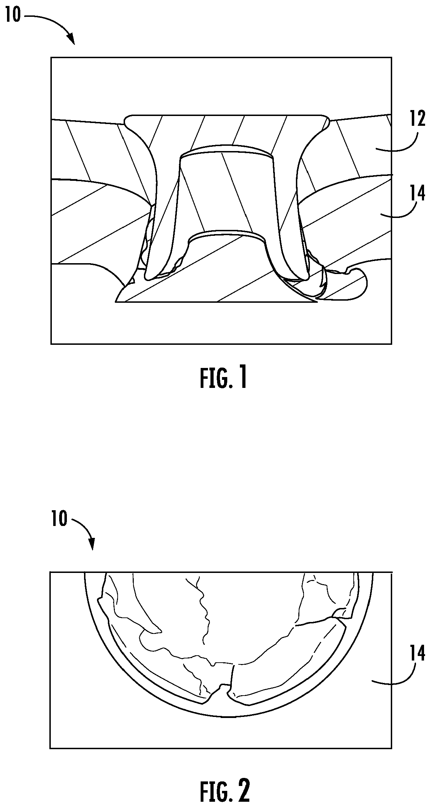

By way of example, FIGS. 1 and 2 show side cross-sectional and bottom views of a conventional SPR joint 10 for a magnesium alloy die casting. The SPR joint 10 is formed from two metal sheets including an upper sheet 12 (e.g., layer, etc.) formed from a 5000 series aluminum alloy, and a bottom sheet 14 formed from an AM60 magnesium alloy.

Among other benefits, the aluminum alloy separates the surfaces of the steel rivet from the magnesium alloy to reduce the likelihood of galvanic corrosion. However, due to the crystalline structure of the magnesium alloy, the force of the rivet pressing against the magnesium alloy layer can cause severe cracking (e.g., button cracking) radiating from the tail of the rivet along the perimeter of the button-shaped area, which can reduce the structural integrity of the casting.

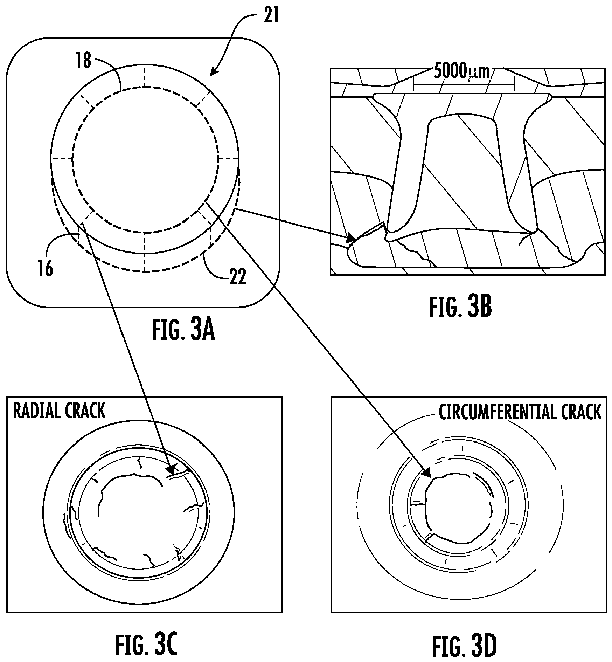

FIGS. 3A-3D show additional failure modes that may result from the joining of magnesium alloy sheets using conventional SPR processes. Failure modes include (i) edge cracks 22 that emanate from the tip of the rivet beyond an outer perimeter of the button 21 and extend circumferentially about the button (see FIG. 3B); (ii) radial cracks 16 along the outer portion of the button-shaped area that extend radially across a surface transition at the outer portion (see FIG. 3C); (iii) circumferential cracks 18 that extend circumferentially along a lower face of the button (see FIG. 3D); and (iv) bumps where a section of the magnesium shears outwardly from the lower face of the button, among other failure modes (e.g., shear cracking, etc.).

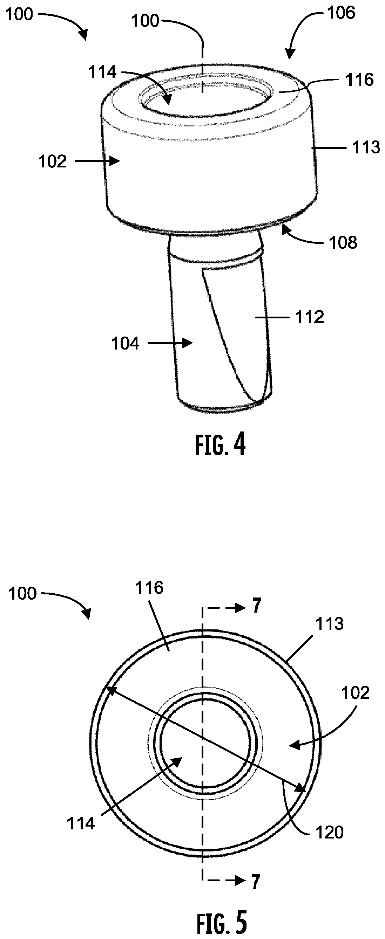

Referring now to FIGS. 4-12C, an improved forming die structure and method of rivet and die selection in accordance with the present application are shown that enable joining of magnesium alloys using SPR techniques using existing installation devices and that significantly reduces the risk of cracking at the SPR joint. In at least one embodiment, the method includes selecting a rivet and die combination based on material properties and a volume of at least one layer of the material to be joined (e.g., a first material layer being joined to a magnesium second layer, etc.). For example, the method may include selecting a rivet geometry inclusive of a web thickness of the rivet based on material properties (e.g., a material strength) of the top layer (e.g., rivet facing layer). In some embodiments, the rivet may include a rivet web thickness that is less than or equal to half of a web thickness of conventional SPR rivets. The method may also include determining a die cavity geometry inclusive of a die cavity volume based on a thickness and strength of the at least one layer (e.g., the top layer, the rivet facing layer, etc.).

In at least one embodiment, the forming die includes a recessed area (e.g., cavity, depression, etc.) that is uniquely shaped to control the volume of deformed magnesium alloy during rivet installation, to reduce overall deformation, and to reduce transitions (e.g., sharp edges, corners, etc.) at the outer edge of the button. Among other benefits, the forming die and die selection method have proved capable of joining a wide range of materials and material thicknesses using existing die installation devices without cracking the magnesium alloy sheet.

FIG. 4-7 show a forming die 100 for an SPR joining device, according to an exemplary embodiment. The joining device may be a mechanical press, a self-piercing rivet gun, or another powered sheet material joining apparatus. As shown in FIG. 4, the die 100 includes a die body 102 and a shank 104 (e.g., stem, coupler, etc.) that is configured to engage with the SPRjoining device and to secure the die body 102 to the device. The die body 102 includes a first (e.g., upper) end 106 and a second (e.g., lower) end 108 spaced axially apart from the first end 106. The shank 104 is coupled to the second end 108 and extends axially away from the second end 108. In at least one embodiment, the shank 104 and the die body 102 are integrally formed as a single unitary structure/body (e.g., are cast or otherwise formed from a single piece of material, are inseparable without damaging the die 100, etc.). The die 100 may be formed from a hardened steel or another suitable material to resist deformation under loading during SPR installation operations.

In at least one exemplary embodiment, the shank 104 is a cylindrically-shaped extension (e.g., rod, post, etc.) that extends parallel to a central axis 110 of the die body 102, such that the shank 104 is concentric with the die body 102. The shank 104 may include at least one slot, notch, cut, groove, channel, or the like to facilitate engagement with the joining device or coupling between the shank 104 and the joining device. As shown in FIG. 4, the shank 104 includes an angled notch 112 that extends axially along the shank 104, from a lower end of the shank 104 to an intermediate position between opposing axial ends of the shank 104. The shank 104 is also tapered radially inward between the notch 112 and the die body 102, such that an outer diameter of the shank 104 is reduced where the shank 104 connects with (e.g., engages) the die body 102. It will be appreciated that the design of the shank 104 may be different in various exemplary embodiments to accommodate different types of SPR joining devices and equipment.

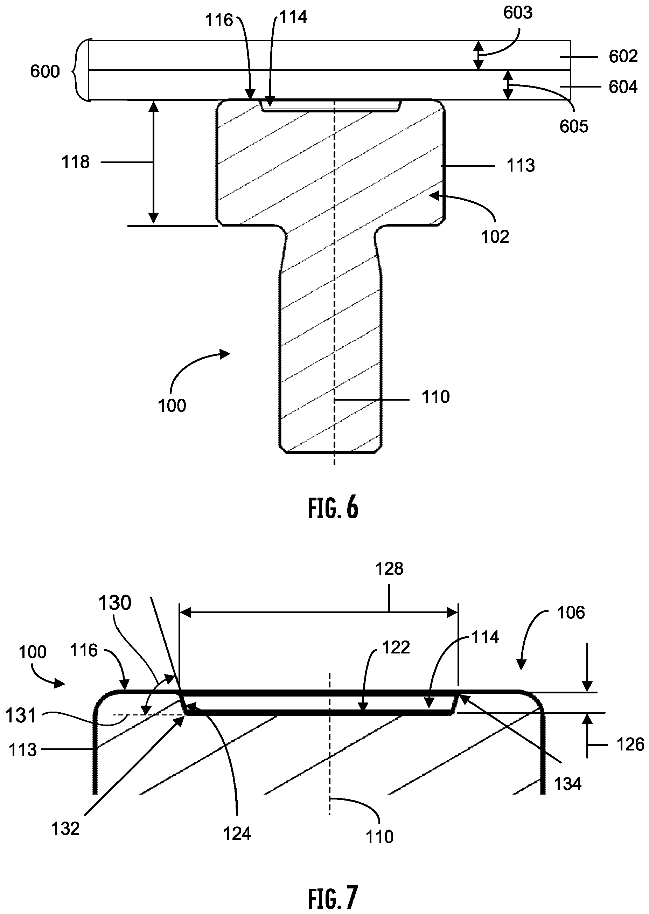

As shown in FIG. 6, the die body 102 is configured to engage with a lower surface of a stack 600 of metal sheets and to provide a supporting surface for the stack 600 to accommodate deformation of at least a portion of the stack 600 during rivet installation. In the embodiment of FIG. 6, the stack 600 includes an upper layer 602 (e.g., a top layer, a first layer, etc.) and a lower layer 604 (e.g., a bottom layer, a second layer, etc.) that is disposed between the upper layer 602 and the die body 102. The lower layer 604 may be in direct contact with the upper layer 602 or may be at least partially separated from the upper layer 602 by an intervening adhesive layer.

The upper layer 602 may be a rivet-facing layer through which the rivet enters the casting. In at least one embodiment, the upper layer 602 (e.g., the first layer, the top layer, sheet, etc.) includes at least one steel material layer and/or one aluminum material layer and/or another metallic layer. In other embodiments, the upper layer 602 may include a plastic layer. In some embodiments, the upper layer 602 includes multiple layers of the same or different materials. The steel layer(s) may have a variety of different compositions. For example, in one embodiment, the steel may be a low carbon steel (e.g., mild steel) having iron alloyed with about 0.25 wt% carbon. In another embodiment, the steel may be a high carbon steel having iron alloyed with up to about 2.5 wt% carbon. In other embodiments, the steel may be a stainless steel having iron alloyed with chromium and nickel. According to other embodiments, steel may be used including at least one of iron, carbon, manganese, chromium, nickel, tungsten, molybdenum, boron, titanium, vanadium, cobalt, niobium, or a combination thereof. For example, the steel layer may include CR3 steel, which includes about 0.10% carbon (C), about 0.45% manganese (Mn), at most 0.03% sulfur (S), at most 0.04% phosphorus (P), balance iron (Fe), and trace impurities, a CR2 steel (e.g., a mild steel CR2 having an ultimate tensile strength (UTS) of approximately 319 MPa, etc.), a ferrite-martensite dual phase (DP) 600 steel (e.g., a dual phase steel DP600 having a UTS of approximately 640 MPa, a dual phase steel DP780 having an UTS of approximately 767 MPa, etc.), which includes about 0.10% carbon (C), about 1.4% manganese (Mn), about 0.14% silicon (Si), balance iron (Fe), and trace impurities, galfan (GF) steel and/or cold formed (CF) steel composite, advanced high strength (AHSS) steel, and/or another steel or steel alloy.

The aluminum layer(s) may include an aluminum casting, an aluminum extrusion, an aluminum sheet, or the like. In one embodiment, at least one layer of aluminum may be a 1000 series aluminum alloy, a 2000 series aluminum alloy, a 3000 series aluminum alloy, a 4000 series aluminum alloy, a 5000 series aluminum alloy (e.g., an aluminum 5083 having an UTS of approximately 276 MPa), 6000 series aluminum alloy (e.g., an aluminum 6061-T6 having an UTS of approximately 326 MPa, etc.), a 7000 series aluminum alloy, or an 8000 series aluminum alloy.

The 1000 series aluminum alloy (i.e. 1050, 1060, 1070, 1100, 1145, 1199, 1350, etc.) is essentially pure aluminum with a minimum 99 wt% aluminum content and may be work hardened. The 2000 series aluminum alloy (i.e. 2011, 2014, 2024, 2036, 2048, 2090, 2091, 2099, 2124, 2195, 2218, 2219, 2319, 2618, etc.) is alloyed with copper and may be precipitation hardened to strengths comparable to steel. The 3000 series aluminum alloy (i.e. 3003, 3004, 3005, 3102, 3103, 3105, 3303, etc.) is alloyed with manganese and may be work hardened. The 4000 series aluminum alloy (i.e. 4006, 4007, 4015, 4032, 4043, etc.) is alloyed with silicon. The 5000 series aluminum alloy (i.e. 5005, 5010, 5019, 5026, 5050, 5052, 5056, 5059, 5083, 5086, 5154, 5182, 5252, 5254, 5356, 5454, 5456, 5457, 5652, 5657, 5754, Al3Mg, etc.) is alloyed with magnesium and offer enhanced corrosion resistance. The 6000 series aluminum alloy (i.e. 6005, 6009, 6010, 6060, 6061, 6063, 6063A, 6065, 6066, 6070, 6081, 6082, 6101, 6105, 6151, 6162, 6201, 6205, 6262, 6351, 6463, etc.) is alloyed with magnesium and silicon and is machinable, weldable, and may be precipitation hardened. The 7000 series aluminum alloy (i.e. 7005, 7039, 7049, 7050, 7068, 7072, 7075, 7079, 7116, 7129, 7175, 7178, 7475, etc.) is alloyed with zinc and may be precipitation hardened to the highest strengths of any aluminum alloy, with a tensile strength up to 700 MPa. The 8000 series aluminum alloy (i.e. 8011, 8090, etc.) is alloyed with elements which are not covered by 1000-7000 series aluminum alloys.

In at least one embodiment, the upper layer 602 instead includes a magnesium casting, magnesium extrusion, magnesium sheet, or another magnesium material layer.

In at least one embodiment, the lower layer 604 (e.g., the second layer, the bottom layer, sheet, etc.) includes a magnesium layer, such as a magnesium alloy, which may or may not form part of a vehicle structure (e.g., a shock tower, a vehicle frame or support member, etc.). The magnesium alloy may be, for example, AE42, AE44, AM20, AM40, AM50, AM60, AM60B, AS21, AS41, AZ31, AZ61, AZ63, AZ80, AZ81, AZ91, Elektron 21, Elektron 675, EZ33, HK31, HM21, HZ32, K1A, LA141, LA103, LAZ43, M1, M1A, QE22, QH21, WE43, WE54, ZC63, ZC71, ZE41, ZK10, ZK20, ZK30, ZK40, ZK51, ZK60, ZK61, ZM21, ZMC711, any alloys with magnesium contents of 80% of higher, or a combination thereof. In at least one exemplary embodiment, the magnesium layer may include AM60B magnesium alloy, which includes about 5.5-6.5% aluminum (Al), about 0.24-0.6% manganese (Mn), at most about 0.22% zinc (Zn), at most about 0.1% silicon (Si), at most about 0.01% copper (Cu), at most about 0.005% iron (Fe), at most about 0.002% nickel (Ni), balance magnesium (Mg), and trace impurities. The lower layer 604 may be a magnesium casting, a magnesium extrusion, a magnesium sheet, or the like. In at least one exemplary embodiment, the magnesium layer may include a coating material. For example, the magnesium layer may be pre-coated using an electrophoretic coating or may include a powder coat on a lower surface that faces the die body 102. In some embodiments, the lower layer 604 includes another material with reduced formability relative to the upper layer(s) 602.

The thickness of each material layer may vary depending on the desired properties of the stack 600. Among other benefits, the same die body 102 design may be used to accommodate a wide variety of material layer thicknesses without causing cracking of the magnesium die casting. As shown in FIG. 6, a thickness 603 of the upper layer 602 is less than or equal to approximately 2.5 mm. For example, the upper layer may be a CR2 steel sheet having a thickness of approximately 1.3 mm, a DP600 steel sheet having a thickness of approximately 1.0 mm, a DP780 steel sheet having a thickness of approximately 1.6 mm, a 6061-T6 aluminum sheet having a thickness of approximately 2.0 mm, a 5083 aluminum sheet having a thickness of approximately 1 mm or 2 mm, or within a range between 1 to 2 mm, or another material/thickness combination. In at least one embodiment, a thickness 605 of the lower layer 604 is within a range between approximately 3 to 3.6 mm. For example, the lower layer 604 may be a 3 mm, 3.1 mm, 3.2 mm, 3.3 mm, 3.4 mm, 3.5 mm, or 3.6 mm AM60B magnesium alloy sheet, etc. The foregoing material specifications, in combination with the geometry of the die body 102, have been shown to significantly reduce the risk of cracking in the SPR joint. However, it will be appreciated that other material thicknesses and combinations may be used while still increasing the structural integrity of the SPR joint relative to conventional forming die designs.

As utilized herein with respect to numerical ranges, the terms "approximately," "about," "substantially," and similar terms generally mean +/- 10% of the disclosed values, unless specified otherwise. As utilized herein with respect to structural features (e.g., to describe shape, size, orientation, direction, relative position, etc.), the terms "approximately," "about," "substantially," and similar terms are meant to cover minor variations in structure that may result from, for example, the manufacturing or assembly process and are intended to have a broad meaning in harmony with the common and accepted usage by those of ordinary skill in the art to which the subject matter of this disclosure pertains. Accordingly, these terms should be interpreted as indicating that insubstantial or inconsequential modifications or alterations of the subject matter described and claimed are considered to be within the scope of the disclosure as recited in the appended claims.

The die body 102 is uniquely shaped to limit the deformation of the magnesium layer (e.g., the lower layer 604) while allowing the rivet to achieve proper volume displacement during the joining operation to ensure a robust mechanical interlock between the sheets in the stack 600 with reducing the risk of cracking at the SPR joint. As shown in FIGS. 4-7, the die body 102 may be a substantially cylindrical body having a cylindrical outer wall 113. In other embodiments, the shape of the die body 102 may be different. As shown in FIGS. 4-7, the die body 102 includes a recessed area 114 (e.g., a depression, etc.) disposed in an outer surface 116 (e.g., an axially facing surface, etc.) on the first end 106 (e.g., a first axial end, etc.) of the die body 102. The space between a lower surface 122 of the recessed area 114 and the outer surface 116 defines a die volume (e.g., a die cavity, etc.) into which the material (e.g., the lower layer 604) may deform during the riveting operation. In some embodiments, the die forms a button on the die casting during the riveting operation, a volume of which may correspond with (e.g., may be approximately the same as) the die volume. As shown FIGS. 6-7, the recessed area 114 is disposed in a central position along the outer surface 116 and is approximately coaxial with the cylindrical outer wall 113. In the embodiment of FIGS. 4-7, an axial length 118 of the die body 102, between the first end 106 and the second end 108 is approximately 10 mm (see FIG. 6) (e.g., greater than or equal to 10 mm). An outer diameter 120 of the die body 102 is approximately 20 mm (see FIG. 5) (e.g., greater than or equal to 20 mm, etc.). The die volume may be within a range between approximately 80 mm$^3$ to 150 mm$^3$ (e.g., within a range between approximately 85 mm$^3$ to 148 mm$^3$, etc., or within any range between and including the foregoing values). It will be appreciated that the size and shape of the die body 102 may differ in various exemplary embodiments.

As shown in FIG. 7, the first end 106 of the die body 102 is defined by the outer surface 116 and the recessed area 114. The outer surface 116 is a substantially planar surface that is oriented substantially perpendicular to the central axis 110 of the die body 102. The recessed area 114 is defined by a combination of a lower surface 122 (e.g., an inner surface, etc.) and a side surface 124. The lower surface 122 is offset from and oriented parallel to the outer surface 116. The lower surface 122 is also a substantially planar surface. In some embodiments, the depth of the lower surface 122 (e.g., the axial distance between the outer surface 116 and the lower surface 122) is a function of the total thickness of the stack 600 and the height of the rivet (see also FIG. 6), as will be further described. For example, an increase in the total thickness of the stack 600 (e.g., an increase in the thickness of the top layer, etc.) may require a deeper recessed area 114 to reduce the likelihood of cracking at the button formed by the SPR joint. As shown in FIG. 7, in at least one embodiment, an axial distance 126 between the outer surface 116 and the lower surface 122 of the recessed area 114 (e.g., between the first end 106 of the die body 102 and the inner surface, etc.) is within a range between approximately 0.4 to 1.2 mm (e.g., within a range between approximately 0.5 mm to 0.9 mm, within a range between approximately 0.6 mm to 0.8 mm, etc.). In at least one embodiment, an inner diameter 128 of the outer surface 116 (e.g., an outer diameter of the side surface 124 and/or a diameter at a transition between the outer surface 116 and the side surface 124) is within a range between approximately 13 mm to 18 mm (e.g., greater than 13 mm but less than or equal to 18 mm, within a range between 14 mm to 17 mm, within a range between 16 mm to 17 mm, etc., or any range between and including the foregoing values).

As shown in FIG. 7, the side surface 124 circumscribes the lower surface 122 and extends in an at least partially radial direction between the lower surface 122 and the outer surface 116. In the embodiment of FIG. 7, the side surface 124 extends at an oblique (e.g., non-perpendicular) angle (e.g., is tapered) relative to the lower surface 122 and the outer surface 116, such that the side surface 124 forms a cone or conical shape (e.g., a frustoconical shape) having a greater diameter proximate to the outer surface 116 than the lower surface 122. A width of the side surface 124 along a horizontal reference line (e.g., parallel to a reference line extending through the lower surface 122) may be approximately 0.3 mm (e.g., within a range between approximately 0.2 mm to 0.9 mm, 0.3 to 0.8 mm, 0.2 mm and 0.4 mm, etc., or any range between and including the foregoing values) or any other suitable dimension. In at least one embodiment, an angle 130 between the side surface 124 and a reference line/plane 131 passing through the lower surface 122 is within a range between approximately 55 to 80 degrees (e.g., within a range between approximately 59 degrees to 69.4 degrees, approximately 63.4 degrees, or any other range between and including the foregoing values, etc., or any range between and including the foregoing values). In at least one embodiment, a radius 132 at the transition between the lower surface 122 and the side surface 124 is approximately 0.2 mm (e.g., within a range between approximately 0.1 mm to 0.3 mm, etc., or any other range between and including the foregoing values). A radius 134 at the transition between the side surface 124 and the outer surface 116 may be approximately the same as the radius 132 between the lower surface 122 and the side surface 124. In other embodiments, the radius 134 at the transition between the side surface 124 and the outer surface 116 may be different.

In some embodiments, the dimensions of the die body 102 (e.g., the recessed area 114), and the button or protrusion at the SPR joint may be determined based on the material properties of at least one material layer of the die casting, as will be further described. For example, the die volume (e.g., a diameter of the die volume inclusive of the inner diameter 128, a depth of the recessed area that defines the die volume such as the axial distance 126, etc.) may be determined based on a volume of displaced material from the upper layer 602 (e.g., the rivet-facing layer, the non-magnesium layer, etc.) during the riveting operation. For example, the die volume may be determined based on a volume of the upper layer 602 that is pierced by the rivet. The pierced volume of the upper layer 602 may be determined based on (i) the thickness 603 (see FIG. 7) of the upper layer 602, (ii) the geometry of the rivet (e.g., the geometry of a cylindrical extension or tail of the rivet), and (iii) an amount of deformation of the rivet during the riveting operation. The dimensions of the button or protrusion at the SPR joint may be approximately equal to the dimensions of the recessed area 114 so that the button may nestably engage the recessed area 114 and/or may have substantially the same dimensions as the recessed area 114 after the button has been formed.

In at least one embodiment, the die volume of the die used in the SPR operation (and/or the volume of the button-shaped protrusion in the lower layer formed by the SPR operation) increases with the pierced volume of the upper layer 602, such as with the thickness 603 of the upper layer 602. The die volume may increase approximately linearly with the pierced volume of the upper layer 602. For example, the die volume may increase approximately linearly between an upper and a lower threshold die volume, as determined based on Equations (1) and (2) below:

$$V_{d,u} = cV_p + 138 \qquad (1)$$

$$V_{d,l} = cV_p \qquad (2)$$

where $V_{d,u}$ represents the upper threshold die volume, $V_{d,l}$ represents the lower threshold die volume, $V_p$ represents the pierced volume of the upper layer 602, and c is a constant that varies within a range between approximately 12.5 to 13 (e.g., within a range between 12.7 to 12.9, approximately 12.8, etc.). In at least one embodiment, the die volume may be an average of the upper and lower threshold die volumes.

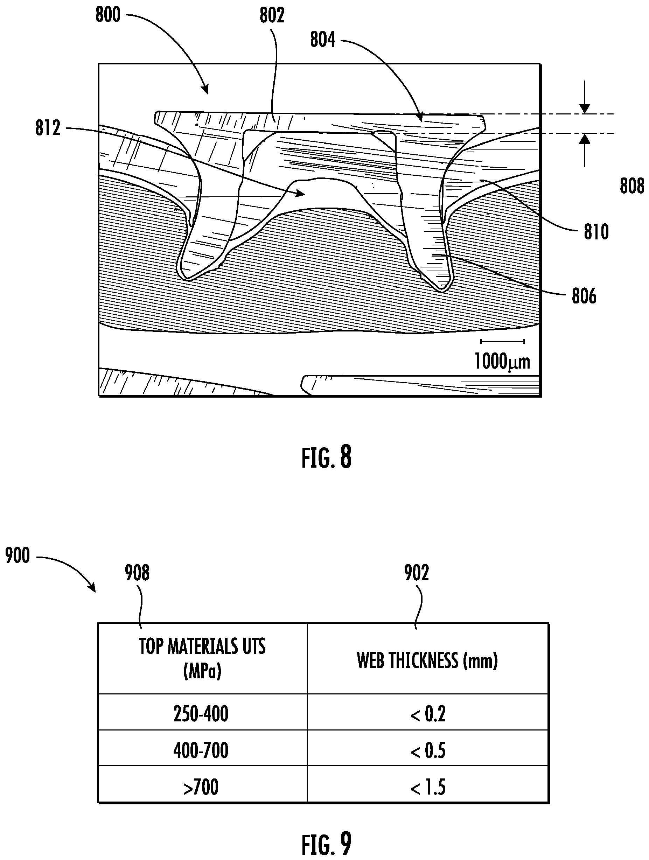

The design of the rivet used in the SPR process can also affect the strength of the casting. For example, FIG. 8 shows a cross-section through a rivet 800 that is configured to enable joining of magnesium alloys using SPR techniques using existing installation devices and that significantly reduces the risk of cracking at the SPR joint. The rivet 800 may made from steel or another suitable material. For example, the rivet 800 may be a tubular or semi-tubular rivet having a head and cylindrical extension that together define a hollow interior cavity. The rivet may be made from high strength steel.

In at least one embodiment, as shown in FIG. 8, the rivet 800 includes a web 802 across a head 804 of the rivet 800, in a region of the head 804 that extends radially inward of a cylindrical extension 806 of the rivet 800, having a reduced thickness 808 relative to conventional SPR rivet designs. For example, the thickness 808 of the web 802 may be less than or equal to approximately 0.5 mm in some embodiments. As shown in FIG. 8, a thickness of the web 802 may be less than or approximately equal to a thickness of the head 804 (e.g., a thickness of an axially oriented surface defined by an outer perimeter of the head 804, a thickness of the head 804 in an area of the head 804 having the greatest outer diameter, etc.). The reduction in the thickness of the web allows material from the upper layer 810 to fold, deform, or otherwise extend axially into the interior cavity, shown as a pocket 812, of the tubular rivet 800, and to engage with a lower surface of the head 804 (e.g., the web 802) of the rivet 800. In the embodiment of FIG. 8, the upper layer 810 extends to a region that is approximately axially aligned with the head 804. This additional space or volume in the pocket 812 of the rivet 800 can reduce compression on the magnesium lower layer during installation of the rivet 800 and thereby reduce the risk of cracking at the SPR joint.

In some embodiments, the thickness 808 of the web 802 may be determined based on the material properties of at least one material layer of the die casting, as will be further described. For example, the thickness 808 may be determined based on a UTS of the upper layer 810 (e.g., the rivet-facing layer, the non-magnesium layer, etc.), regardless of other properties of the material for the upper layer 810. The thickness 808 of the web 802 may decrease with the UTS of the upper layer 810. In at least one embodiment, the thickness 808 of the web 802 may be determined as shown in the table 900 of FIG. 9, which shows approximate web thicknesses 908 for a rivet (e.g., rivet 800) as a function of the UTS 902 of the upper layer 810 material. For instance, the thickness 808 of the web 802 may be less than or equal to approximately 1.5 mm for an upper layer 810 having a UTS of greater than or equal to approximately 700 MPa, less than or equal to approximately 0.5 mm for an upper layer 810 having a UTS within a range between approximately 400 to 700 MPa, and less than or equal to approximately 0.2 mm for an upper layer 810 having a UTS within a range between approximately 250 to 400 MPa. Reducing web thickness with the UTS in this way can significantly increase the structural integrity of the casting at the SPR joint.

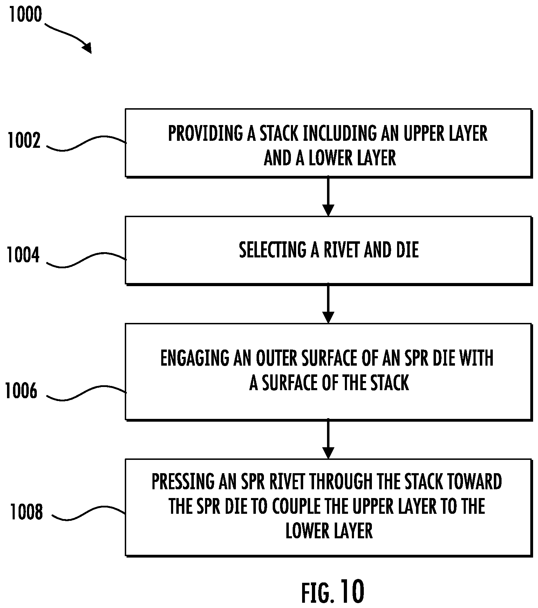

FIG. 10 shows a method 1000 of forming an SPR joint and/or magnesium die casting, according to an embodiment. The method 1000 may be performed using the SPR die 100 of FIGS. 4-7, the upper layer 602 and the lower layer 604 of FIG. 6, and the rivet 800 of FIG. 8. As such, the method 1000 will be described with reference to FIGS. 4-8. In other embodiments, the method 1000 may include additional, fewer, and/or different operations.

At 1002, an upper layer (e.g., the upper layer 602 of FIG. 6) and a lower layer (e.g., the lower layer 604 of FIG. 6) are provided, where at least one of the upper layer and the lower layer includes and/or is made from a magnesium layer. Operation 1002 may include stacking the upper layer and the lower layer together by placing the upper layer above (e.g., on an upper surface of, etc.) the lower layer. In one embodiment, operation 1002 includes pre-coating the magnesium layer using an electrophoretic coating and/or applying a powder coat on a lower surface (e.g., a bottom surface) of the magnesium layer that faces the SPR die. In some embodiments, operation 1002 includes placing the upper layer in direct contact with the lower layer. In other embodiments, operation 1002 includes applying an adhesive layer between the upper layer and the lower layer.

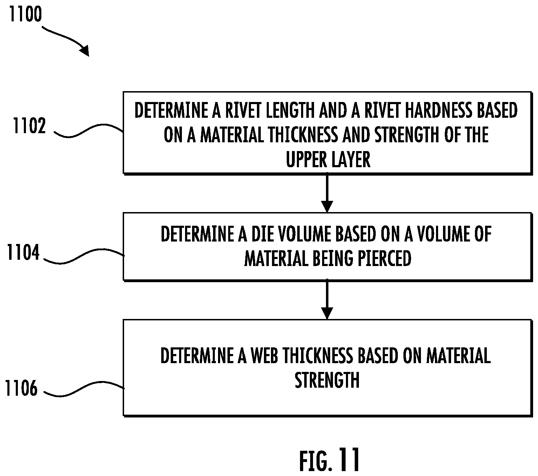

At 1004, a rivet and die combination are determined and selected based on a material characteristic, such as a size and/or material properties of the upper layer and/or the lower layer. FIG. 11 shows a method 1100 of selecting the rivet and die for the SPR riveting operation, according to an embodiment. At 1102, a rivet type inclusive of a size and a hardness of the rivet is determined based on a material thickness of the upper layer. Operation 1102 may include using a rivet selection table to select the rivet type with sufficient strength to pierce through the upper and lower layers. At 1104, a die volume is determined based on a volume of upper layer material being pierced by the rivet (e.g., a pierced volume of the upper layer, etc.). Operation 1104 may include determining an average die volume by taking an average of an upper and lower die volume threshold as described above with respect to Equations (1) and (2).

At 1106, a web thickness of the rivet is determined based on a strength of the upper layer (e.g., the rivet-facing layer, the non-magnesium layer, etc.). Operation 1106 may include scaling the web thickness proportionately to the strength of the upper layer. In some embodiments, operation 1106 may include determining the web thickness using a table and/or algorithm, as described with reference to FIG. 8. The output of method 1100 is a rivet and die selection that can significantly reduce the risk of material cracking during the SPR riveting operation.

Returning to method 1000, once the rivet and die are selected, the SPR die is brought into engagement with the stack that includes the upper layer and the lower layer, at 1006. Operation 1006 may include engaging an outer surface of the SPR die with a lower surface of the lower layer, manually or by activating an SPR joining device to draw the SPR die up against the lower surface of the lower layer. The SPR die may be the same as or similar to the SPR die described with reference to FIGS. 4-7. Operation 1006 may include clamping the stack between the SPR die and a blank holder that holds the stack against the SPR die.

At 1008, an SPR rivet is provided and pressed through the stack into the SPR die to couple the upper sheet and the lower sheet together (with the SPR rivet). Operation 1008 may include providing a tubular rivet made from steel (e.g., inserting the SPR rivet into a joining tool that includes the SPR die) and applying a force to the SPR rivet and/or die to deform and/or pierce the sheets in the stack. Operation 1008 may include using a press to drive the rivet from an upper side of the stack, into the stack and toward the die, piercing the upper sheet and causing the lower sheet to expand into the SPR die to form a button-shaped protrusion in the lower sheet.

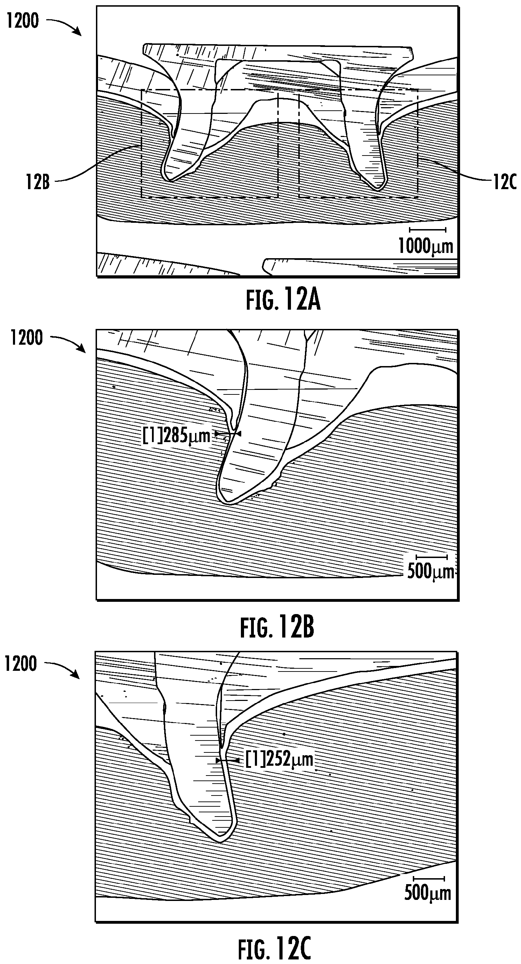

The forming die structure, rivet design, and rivet/die selection process of the present disclosure provides several benefits over traditional SPR techniques. The forming die includes a recessed area that is uniquely shaped to control the volume of the deformed magnesium alloy, to reduce deformation of the magnesium alloy during rivet installation, and to reduce transitions (e.g., sharp edges, corners, etc.) along the outer edge of the recessed area. This unique shape reduces the likelihood of cracking during rivet installation into the magnesium alloy. The rivet die complements benefits provided by the forming die, by providing increased volume in the area of the SPR joint for material deflection of the upper layer. When used in an appropriate combination, as described with reference to method 1000 and 1100, a strong and durable magnesium alloy casting can be formed using existing SPR joining devices. For example, FIGS. 12A-12C show cross-sectional views of a magnesium die castings, shown as die casting 1200, formed from by the processes and tools described herein. As shown, the unique geometry of the forming die in combination with the appropriate rivet design ensures uniform and controlled deformation of the magnesium layer, without any observable cracks or structural defects.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

The construction and arrangement of the elements of the SPR joint as shown in the exemplary embodiments are illustrative only. Although only a few embodiments of the present disclosure have been described in detail, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements, the position of elements may be reversed or otherwise varied, and the nature or number of discrete elements or positions may be altered or varied.

Although the figures and description may illustrate a specific order of method steps, the order of such steps may differ from what is depicted and described, unless specified differently above. Also, two or more steps may be performed concurrently or with partial concurrence, unless specified differently above.

Other substitutions, modifications, changes and omissions may also be made in the design, operating conditions and arrangement of the various exemplary embodiments without departing from the scope of the present invention. For example, any element disclosed in one embodiment may be incorporated or utilized with any other embodiment disclosed herein. Also, for example, the order or sequence of any process or method steps may be varied or resequenced according to alternative embodiments. Any means-plus-function clause is intended to cover the structures described herein as performing the recited function and not only structural equivalents but also equivalent structures. Other substitutions, modifications, changes and omissions may be made in the design, operating configuration, and arrangement of the preferred and other exemplary embodiments without departing from the scope of the appended claims.

As such, many modifications may be made from the skilled person without departing from the scope of the appended claims.

**Claims**

1. An SPR joint, comprising:

   an upper layer (602);
   a lower layer (604) comprising a magnesium material; and
   a rivet (800) extending through the upper layer and into the lower layer, the rivet including:

   a head (804);
   a cylindrical extension (806) extending away from the head; and
   a web (802) extending radially inwardly of the cylindrical extension, a thickness (808) of the web being less than or approximately equal to a thickness of the head.

2. The SPR joint of claim 1, wherein the thickness of the web is less than or equal to approximately 1.5 mm.

3. The SPR joint of claim 1 or 2, wherein the head and the cylindrical extension together defining an interior cavity (812), the upper layer extending axially into the interior cavity to a region that is approximately axially aligned with the head.

4. The SPR joint of any one of claims 1-3, wherein the rivet forms a protrusion in the lower layer, a volume of the protrusion being within a range between (i) $cV_p$, and (ii) $cV_p + 138$, where $V_p$ represents a pierced volume of the upper layer that is occupied by the rivet, and c is a constant that varies within a range between approximately 12.5 to 13.

5. The SPR joint of any one of claims 1-4, wherein the upper layer comprises one of a steel material, an aluminum material, or the magnesium material.

6. The SPR joint of any one of claims 1-5, wherein a thickness (603) of the upper layer is less than or equal to approximately 2.5 mm, and a thickness (605) of the lower layer is within a range between approximately 3 to 3.6 mm.

7. The SPR joint of any one of claims 1-6, wherein the thickness of the web is less than or equal to approximately 1.5 mm when an upper layer material of the upper layer has an ultimate tensile strength (UTS) of greater than or equal to approximately 700 MPa, less than or equal to approximately 0.5 mm when the UTS of the upper layer material is within a range between approximately 400 to 700 MPa, and less than or equal to approximately 0.2 mm when the UTS of the upper layer material is within a range between approximately 250 to 400 MPa.

8. A method of forming an SPRjoint, comprising:

   providing a stack (600) including an upper layer (602) and a lower layer (604), at least one of the upper layer or the lower layer including a magnesium layer;
   engaging an outer surface (116) of an SPR die (100) with a surface of the stack, the SPR die comprising:

   a lower surface (122) that is spaced apart from the outer surface by a distance (126) that is within a range between approximately 0.4 mm to 1.2 mm; and
   a side surface (124) circumscribing the lower surface and extending between the lower surface and the outer surface, wherein an angle (130) between the side surface and the lower surface is within a range between approximately 55 degrees and 80 degrees, and wherein an inner diameter (128) of the outer surface is within a range between approximately 13 mm and 18 mm; and

   pressing a rivet (800) through the stack toward the SPR die.

9. The method of claim 8, further comprising determining a web thickness (808) of the rivet based on a material property of the upper layer, and selecting the rivet based on the web thickness.

10. The method of claim 9, wherein the material property is an ultimate tensile strength of the upper layer.

11. The method of any one of claims 8-10, further comprising determining a die volume of the SPR die based on a pierced volume of the upper layer.

12. The method of any one of claims 8-11, wherein pressing the rivet through the stack comprises pressing a head (804) of the rivet toward the stack to deform the upper layer into an interior cavity (812) defined by the rivet so that the upper layer extends axially into the interior cavity to a region that is approximately axially aligned with the head.

13. The method of any one of claims 8-12, wherein the inner diameter is within a range between 14 mm to 18 mm, and wherein the side surface and the lower surface together define a recessed area (114) having a die volume within a range between 80 mm$^3$ to 150 mm$^3$.

14. The method of any one of claims 8-13, wherein the outer surface, the lower surface, and the side surface are disposed at a first end (106) of a die body (102) of the SPR die, the outer surface being concentric with the lower surface, wherein the side surface is a tapered surface having a greater diameter proximate to the outer surface than the lower surface, and wherein optionally the angle between the side surface and the lower surface is within a range between approximately 59 degrees and 69.4 degrees relative to the lower surface.

15. The method of any one of claims 8-14, wherein a radius (134) at a transition between the side surface and the outer surface is approximately the same as a radius (132) at a transition between the lower surface and the side surface.

10

12

14

FIG. 1

10

14

FIG. 2

FIG. 3A

FIG. 3B

FIG. 3C

FIG. 3D

**FIG. 4**

**FIG. 5**

**FIG. 6**

**FIG. 7**

FIG. 8

| TOP MATERIALS UTS (MPa) | WEB THICKNESS (mm) |
|---|---|
| 250-400 | < 0.2 |
| 400-700 | < 0.5 |
| >700 | < 1.5 |

FIG. 9

1000

1002 — PROVIDING A STACK INCLUDING AN UPPER LAYER AND A LOWER LAYER

1004 — SELECTING A RIVET AND DIE

1006 — ENGAGING AN OUTER SURFACE OF AN SPR DIE WITH A SURFACE OF THE STACK

1008 — PRESSING AN SPR RIVET THROUGH THE STACK TOWARD THE SPR DIE TO COUPLE THE UPPER LAYER TO THE LOWER LAYER

FIG. 10

1100

1102

DETERMINE A RIVET LENGTH AND A RIVET HARDNESS BASED ON A MATERIAL THICKNESS AND STRENGTH OF THE UPPER LAYER

1104

DETERMINE A DIE VOLUME BASED ON A VOLUME OF MATERIAL BEING PIERCED

1106

DETERMINE A WEB THICKNESS BASED ON MATERIAL STRENGTH

FIG. 11

FIG. 12A

FIG. 12B

FIG. 12C

Europäisches
Patentamt

European
Patent Office

Office européen
des brevets

# EUROPEAN SEARCH REPORT

**Application Number**

EP 24 15 7408

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/058488 A1 (WISSLING MATTHIAS [DE] ET AL) 1 March 2018 (2018-03-01) * paragraphs [0018], [0032]; figures * ----- | 1-5,7 | INV. B21J15/02 B21J15/36 F16B5/04 F16B19/08 |
| X | CN 114 233 733 B (UNIV SHANGHAI TRAFFIC) 1 November 2022 (2022-11-01) * paragraph [0085]; claim 1; figures 1-5 * ----- | 1,3,5 | |
| X | EP 3 401 055 A1 (UNIV SHANGHAI JIAOTONG [CN]) 14 November 2018 (2018-11-14) * paragraph [0051]; figures * ----- | 1-7 | |
| X | US 2022/305546 A1 (LIU YUCHAO [CA] ET AL) 29 September 2022 (2022-09-29) | 8-12,14, 15 | |
| Y | * the whole document * ----- | 13 | |
| Y | EP 2 606 993 B1 (NEWFREY LLC [US]) 30 July 2014 (2014-07-30) * claim 3 and 4 * ----- | 13 | |

**TECHNICAL FIELDS SEARCHED    (IPC)**

B21J
F16B

The present search report has been drawn up for all claims

| Place of search | Date of completion of the search | Examiner |
|---|---|---|
| Munich | 19 June 2024 | Charvet, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 7408

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2024

| Patent document cited in search report | | Publication date | Patent family member(s) | | Publication date |
|---|---|---|---|---|---|
| US 2018058488 | A1 | 01-03-2018 | EP | 3287210 A2 | 28-02-2018 |
| | | | US | 2018058488 A1 | 01-03-2018 |
| CN 114233733 | B | 01-11-2022 | CN | 114233733 A | 25-03-2022 |
| | | | EP | 4202238 A1 | 28-06-2023 |
| | | | US | 2023184281 A1 | 15-06-2023 |
| | | | WO | 2023083124 A1 | 19-05-2023 |
| EP 3401055 | A1 | 14-11-2018 | CN | 106112543 A | 16-11-2016 |
| | | | EP | 3401055 A1 | 14-11-2018 |
| | | | US | 2019039119 A1 | 07-02-2019 |
| | | | WO | 2018014699 A1 | 25-01-2018 |
| US 2022305546 | A1 | 29-09-2022 | CA | 3153466 A1 | 29-09-2022 |
| | | | US | 2022305546 A1 | 29-09-2022 |
| EP 2606993 | B1 | 30-07-2014 | EP | 2606993 A1 | 26-06-2013 |
| | | | JP | 5821121 B2 | 24-11-2015 |
| | | | JP | 2013128964 A | 04-07-2013 |
| | | | US | 2013160262 A1 | 27-06-2013 |

EPO FORM P0459

For more details about this annex : see Official Journal of the European Patent Office, No. 12/82

**EP 4 417 339 A1**

## REFERENCES CITED IN THE DESCRIPTION

### Patent documents cited in the description

- US 63484779